# EUROPEAN PATENT APPLICATION

(11) **EP 0 664 206 A2**
(43) Date of publication of application: **26.07.1995**
(21) Application number: 95100257.5
(22) Date of filing: 10.01.1995
(51) Int. Cl.: B29D 31/00, B29C 33/36, B29C 33/30

(54) **Method and apparatus for forming polyurethane cover on golf ball core**

(30) Priority: 21.01.1994 US 185667
(71) Applicant: ACUSHNET COMPANY, Fairhaven, Massachusetts 02719 (US)
(72) Inventor: Calabria, John, Fairhaven, MA 02719 (US); Wu, Shenshen, North Dartmouth, MA 02747 (US); Snell, Dean A., North Dartmouth, MA 02747 (US)
(74) Representative: Andrae, Steffen, Dr.

(57) **Abstract**

A method and apparatus for making a golf ball of selected instruction having an encapsulated core or a non-treated core and a polyurethane cover of selected composition in which equipment is employed for aligning, centering and locating the core in relationship with the molding of the cover thereon.

## Description

### Background of the Invention

The use of urethane polymers has been proposed for golf ball cover compositions. One patent teaches initially forming two urethane shell blanks from which cover halves are made (U. S. Patent No. 3,989,568). Another patent suggests forming a smooth cover and thereafter impressing dimples in the smooth cover (U.S. Patent No. 5,006,297). Still another patent describes a sequence of filling first half of a mold with urethane, inserting a ball center therein and later adding more urethane to a second half and uniting the second with the first half (U. S. Patent No. 3,147,324).

### Summary of the Invention

Broadly, the present invention is a method and apparatus for making a golf ball comprising treating a core as described herein, placing a polyurethane cover of selected composition thereon in which the treated core is positioned in a mold using a controlled alignment device for centering the core during cover formation.

### Brief Description of the Drawings

Figure 1 is plan view of the core treating apparatus;
Figure 2 is an elevational view of such apparatus;
Figure 3 is an elevational view of alignable device for placing a treated core in a mold half;
Figure 3a is a partial side elevational view of the alignable device;
Figure 4 is a sectional view along line 4-4 of Figure 3;
Figure 5 is a plan view showing a mold being positioned in the alignment device;
Figure 6 shows apparatus for mixing polyurethane, dispensing it in a mold half and shows one mold half being inverted before mating with a second mold half.
Figure 7 shows a plan view of set-up mold;
Figure 7a shows a side view of set-up core with alignment holes;
Figure 8 is a graph plotting voltage vs. cps;

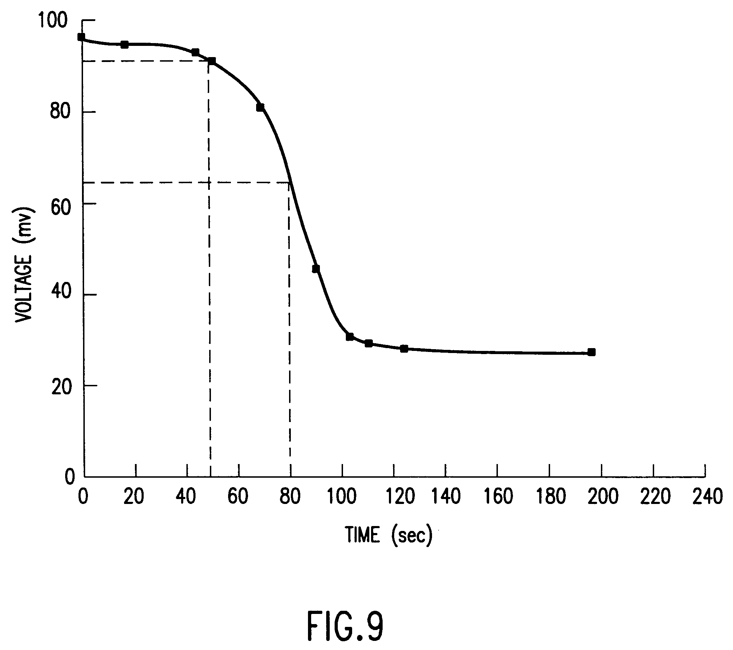

Figure 9 is a graph plotting voltage vs. time;
Figure 10 is a table of process steps in a timed sequence;
Figure 11 is a graph plotting hardness vs. spin rate;
Figure 12 is a graph plotting initial velocity vs. wound ball size;
Fig. 13 is a front elevational view of an alternative embodiment of the core alignment device;
Fig. 13a is a side elevational view of the alignment device;
Fig. 14 is a sectional view along line 14-14 of Fig. 3; and
Fig. 15 is a plan view of a mold half with a horizontal aligning rail unit.

### Description of the Preferred Embodiment

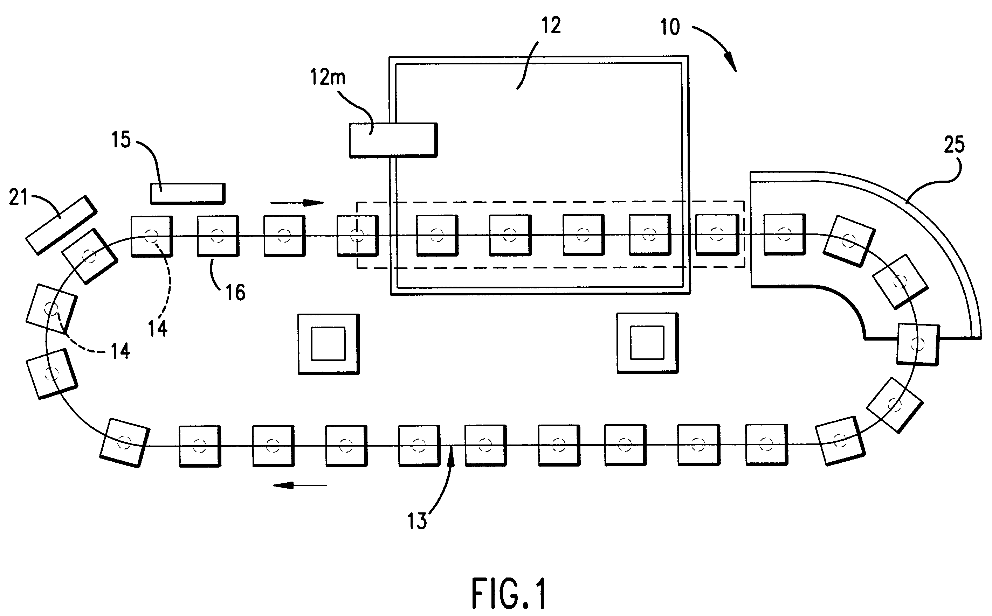

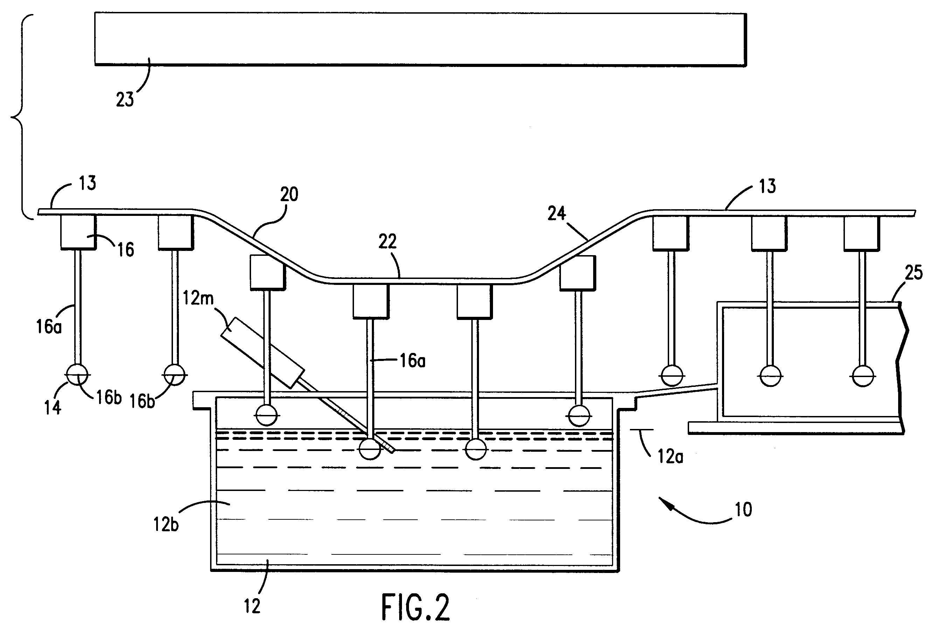

Turning to the Figures, and in particular to Figures 1 and 2, dipping apparatus 10 includes a dip tank 12 filled to level 12a and agitated by electric mixer 12m. Apparatus 10 also includes oval conveying rack 13 with ball core carriers 16. Dip tank 12 is filled with latex bath 12b to level 12a and, if latex has been in tank 12 for a substantial length of time, initial mixing of bath 12b in tank 12 should be carried out until uniformity of bath 12b is reached. After such mixing golf ball cores 14 are loaded at loading station 15 into holding carriers 16 each comprising a stem 16a and a holder ring 16b. During normal operation tank 12 is agitated by electric mixer 12m. Loaded carriers 16 are carried by conveying rack 13 along and down to dip cores 14 for 1 to 60 seconds into latex bath 12b. Rack 13 moves through a descending portion 20, dipping portion 22 and ascending portion 24 of the carrier circuit to accomplish the latex dip core treatment. In wound cores the latex encapsulates the core with penetrate to a depth of about 0.050 inch and in solid cores the latex forms an encapsulating coating on the core of 0.001-0.010 inches thick.

After the ball cores 14 exit dip tank 12, they pass into a curing chamber 25 in which heat, ultraviolet rays, or other means for accelerating cure may be applied. It will be understood that some latex bath materials cure sufficiently under ambient conditions that curing chamber 25 is not required. Cores are unloaded at unload station 21.

In accordance with this invention, wound cores 14 preferably are latex dipped while dipping of solid cores 14 is optional. Depending on the nature of the latex material applied, the golf ball dip-treated cores 14 can then be stored for a period of time for additional cure, or, if the latex material is sufficiently cured at this point, the wound cores with the latex dip encapsulate can be transported directly to the molding area for molding of the cover material.

Since the latex material generates low levels of ammonia fumes in the dip tank 12, it is preferred to have a vacuum hood 23 positioned above the dip tank 12. The vacuum hood 23 is preferably provided with means (not shown) for generating a clean air curtain about the periphery of the dip tank 12 to prevent escape of undesirable gasses. The curing chamber 25 can also be provided with suitable gas removal means.

As described above, the initial step of the process of the present invention is the dipping of the core in a latex bath. The preferred core is a wound core but any core, molded or wound, may be treated by the present process. With a molded core the advantage of such latex dip treatment is the increased velocity attainable to golf balls made with such cores. With a wound core the advantages are increased velocity, reduction of flow of air into the cover material during cover formation and prevention of rubber strand unravelling.

It is important that a thermosetting, not a thermoplastic, latex be employed so that the arrangement of the cover material to the core encapsulated will not soften the encapsulating envelope and permit air to pass through it into the interstices in the windings of the wound core or allow the rubber strands to unravel.

The thermosetting latex materials which are useful in the present invention are any materials which will withstand the temperatures at which the cover material is to be applied. This temperature will, of course, depend upon the particular fluidization temperature of the selected cover material. Typical thermosetting latex materials which can be used are: low ammonia, natural latex or pre-vulcanized natural latex with or without penetrant. When using a polyurethane cover material, it has been found that pre-vulcanized natural latex is particularly suitable.

The preferred latex material, Heveatex brand Model H1704 pre-vulcanized natural latex, is a partially pre-vulcanized material which has a 60%-30% water dilution solids content. The preferred penetrant material is Niaproof #4 (tetra decyl sulfate) sold by Niacet Corp. It is understood that non-latex encapsulating materials may also be used.

After latex coating, the cover is formed around the coated core by mixing and introducing the material in mold halves. Once mixed, an exothermic reaction commences and continues. It is important that the viscosity be measured over time, so that the subsequent steps of filling each mold half, introducing the core into one half and closing the mold can be properly timed for accomplishing centering of the core cover halves fusion and achieving overall uniformity.

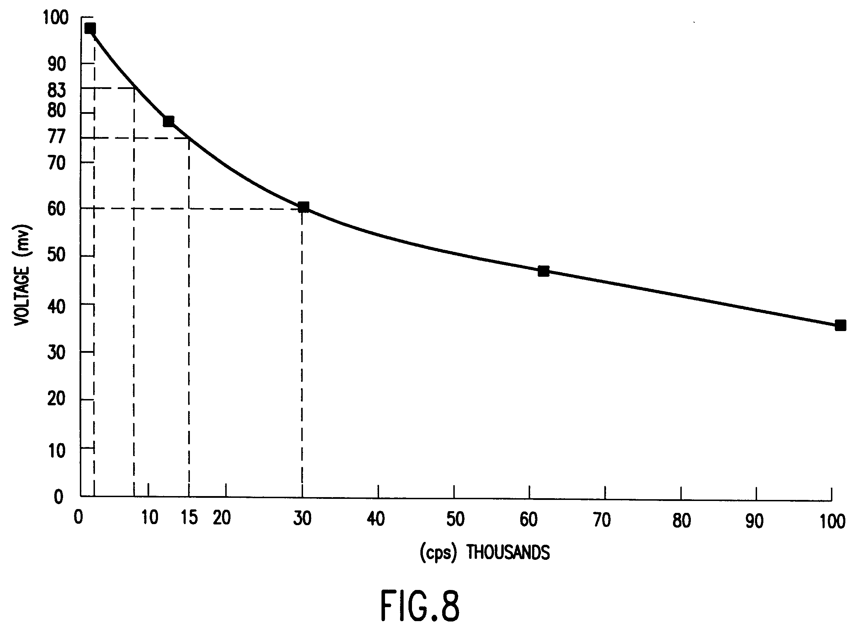

The increase in the viscosity of the urethane mix over time is measured by Vibrating Needle Curemeter (VNC) manufactured by Rapra Technology Limited. It is achieved by suspending a steel needle in the curing formulation. The needle is vibrated vertically by a small electrodynamic vibrator driven by a signal generator. Resistance to its movement is ultimately recorded as the voltage output. Suitable viscosity range of the curing urethane mix for introducing cores 14 into the mold halves 51, 59 is determined to be approximately between 2,000 cps - 30,000 cps or between 60 mv - 98 mv voltage output with the preferred range of 8,000 to 15,000 cps (see Fig. 8). The time (gel time) at which the desired viscosity range occurs for mold mating is measured from first introduction of mix into the top half mold 51a.

The dip coating of latex penetrates the interstices, crevices and openings between the wound core threads to a depth of a fraction of an inch preferable about 0.050 inches and, as solidified, prevents a substantial quantity of air from flowing from the interior of the core into the cover during its formation. A negligible amount of the latex remains on the outside of the wound core. With solid cores about 0.001-0.010 inches is coated on the surface thus reducing the cover thickness by that amount. Small amounts of air passing through or around the latex coating are not large enough to create noticeable imperfections in the cover as determined by visual inspection.

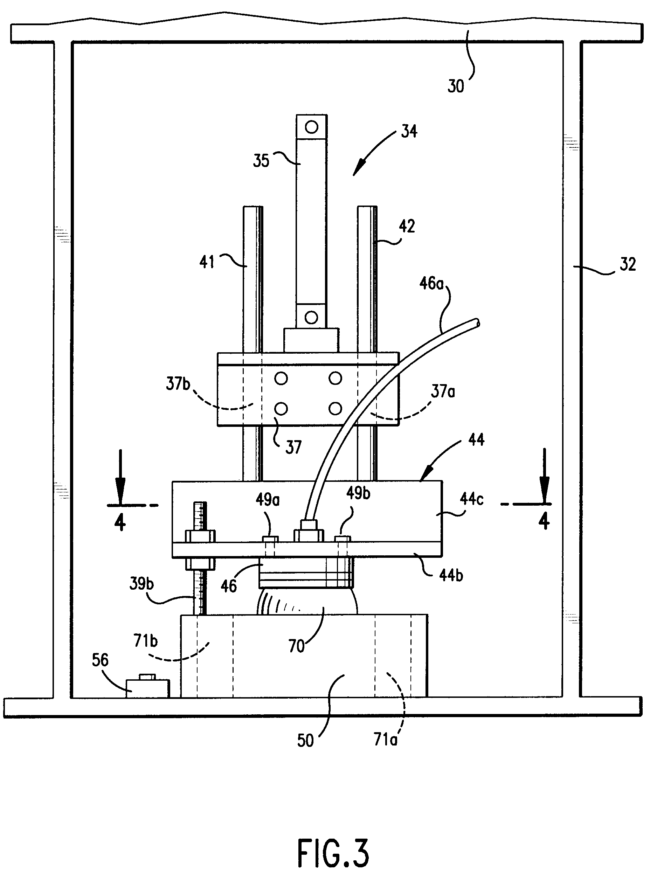

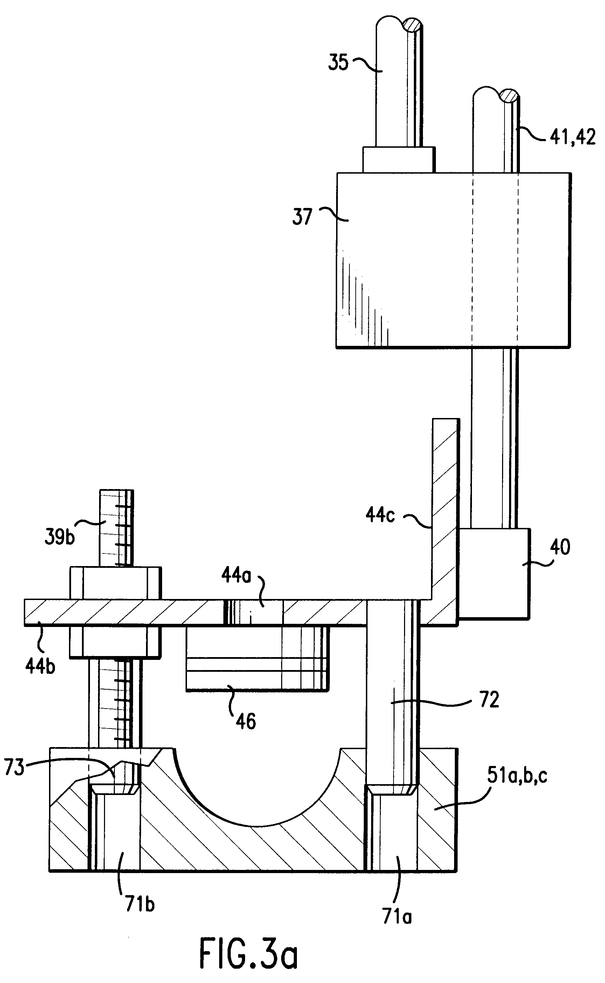

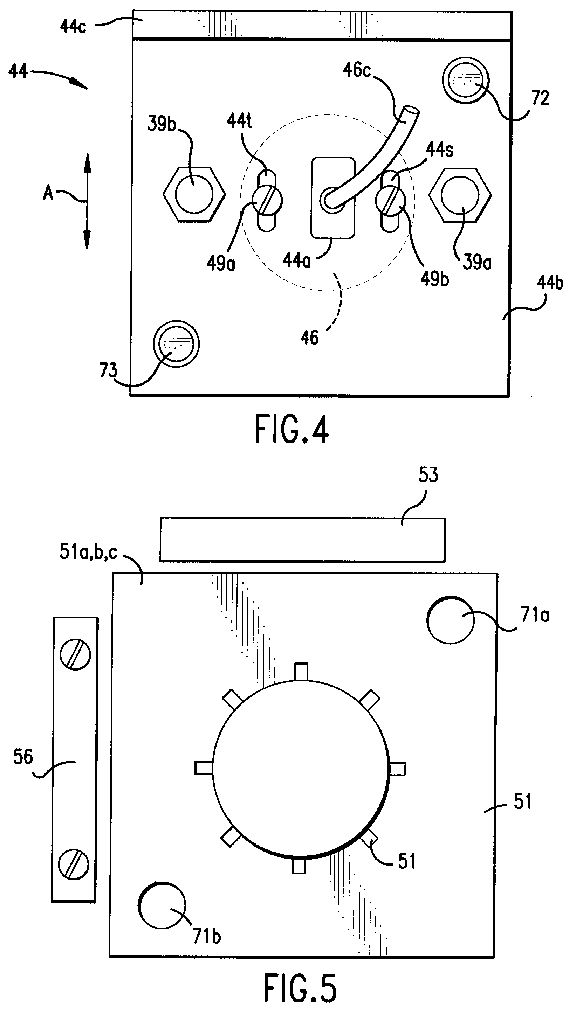

Turning to Fig. 3 and 3a, another step of the process is the formation of the cover on the wound core 12. To accomplish this step a centering fixture is used. Fixture unit 30 includes box frame 32, stationary central guide mount 34 comprising fixed cylinder 35 and stationary guide block 37. Guide block 37 has two (2) parallel passageways 37a, 37b therethrough for receiving movable rods 41, 42 in sliding vertical movement. Rods 41, 42 are fixed to slide ball cup frame unit 44, through back piece 40, which unit 44 carries ball cup 46 mounted on cup plate 44b as described (see Fig. 3a). Ball cup 46 holds ball core 14 through reduced pressure (or partial vacuum) in hose 46a. Ball cup frame unit 44 includes base plate 44b, central opening 44a and upstanding back plate 44c. Back support 40 is secured to back plate 44c. Ball cup 46 is adjustably secured to cup plate 44b through adjustable fasteners 49a, b which ride in slots 44s and 44t (Fig. 4). Cup 46 can be adjusted vis-a-vis plate 44b front and back along arrow A (Fig. 4).

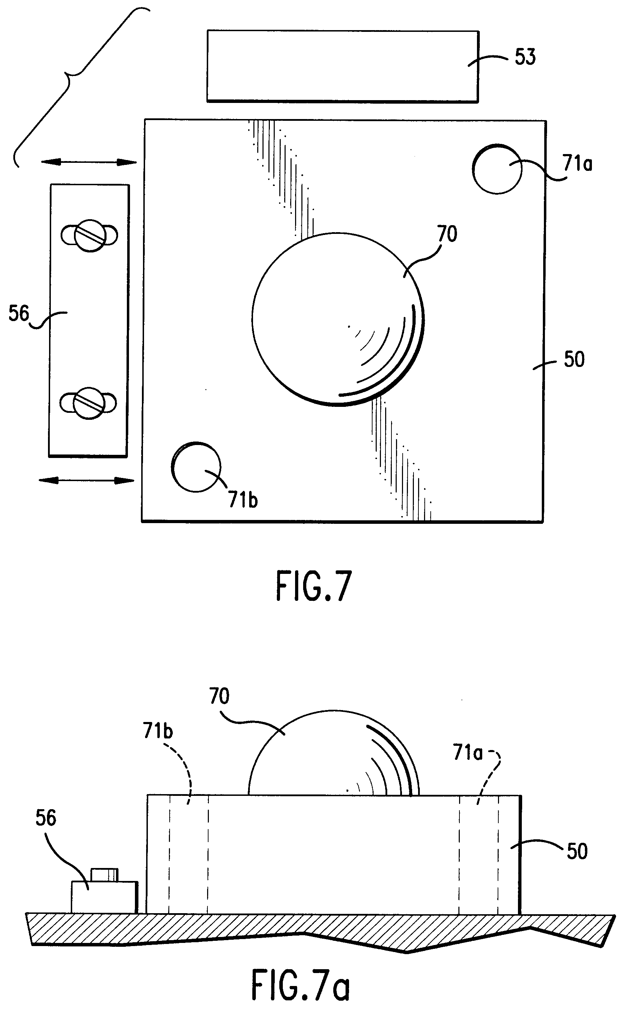

To initially align ball core cup 46 in the proper position for molding of cover material, a machined metal set-up mold 50 is used. Set-up mold 50 is positioned by lowering unit 44 to permit pins 72, 73 to pass through alignment holes 71a, 71b in mold 50. Rails 53 and 56 serve only to assist in placing the mold 50 under unit 44 and after mold 50 is properly aligned it is spaced a few thousandths of an inch from each rail 53, 56 (Fig. 7). With ball cup 46 free through loosened fasteners 49a, b, alignment of cup 46 is accomplished by lowering ball cup 46 until it sits on and contacts set-up core 70. Fasteners 49a, b are tightened when flush contact with ball cup 46 and set-up core 70 has been made. Next, mechanical stop 39b is tightened in this position. Frame unit 44 is then raised from set-up mold 50 and set-up mold 50 is removed from fixture 30.

More than one fixture unit 30 is used in the practice of this invention. With fixture unit 30 so aligned, the set-up mold 50 is removed and is ready to be replaced with a ball core 14 and a series of regular mold halves 51b, 51c, etc.

The core is centered by fixture unit 30 in the top mold half, as then inverted, to a tolerance of about 0.010 of an inch. Such tolerance is described by determining the theoretical center of the core in the mold half and tolerating the actual core center, as fixtured, to be located up to .005 of an inch in any direction for the theoretical center. Since the actual center is tolerated to move .005 inch in any direction from the theoretical center, it can move over a range of 0.010 of an inch.

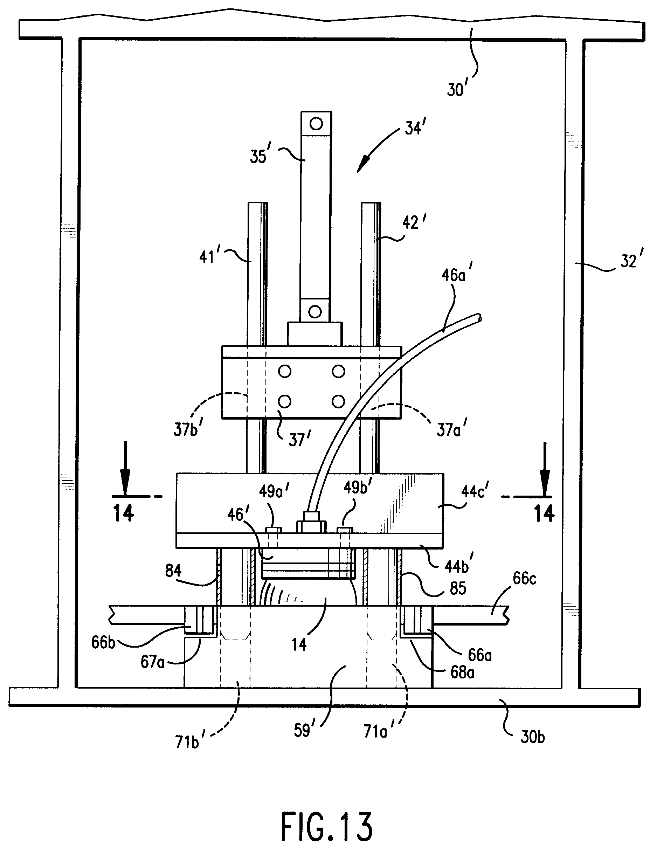

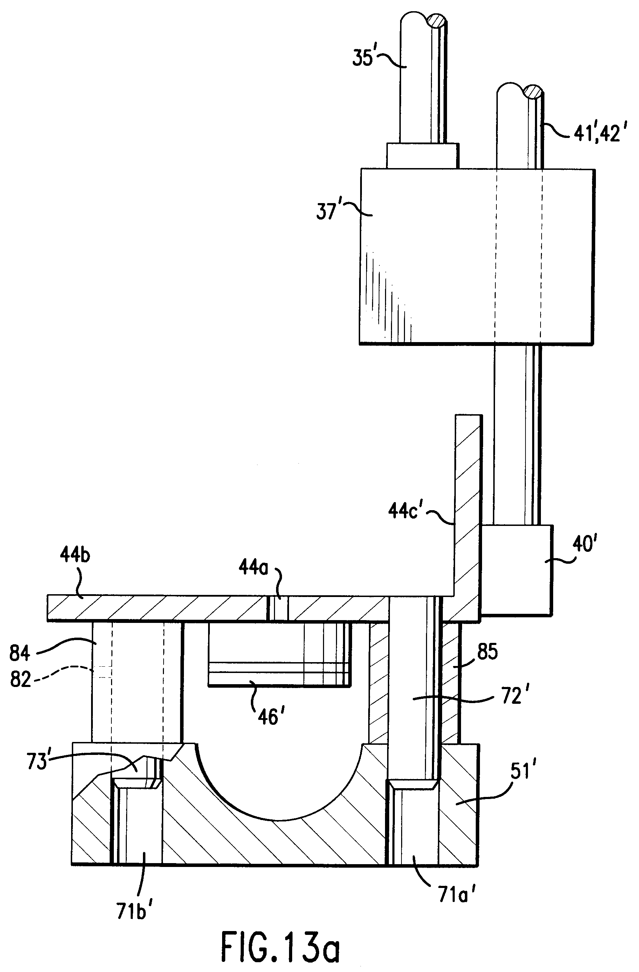

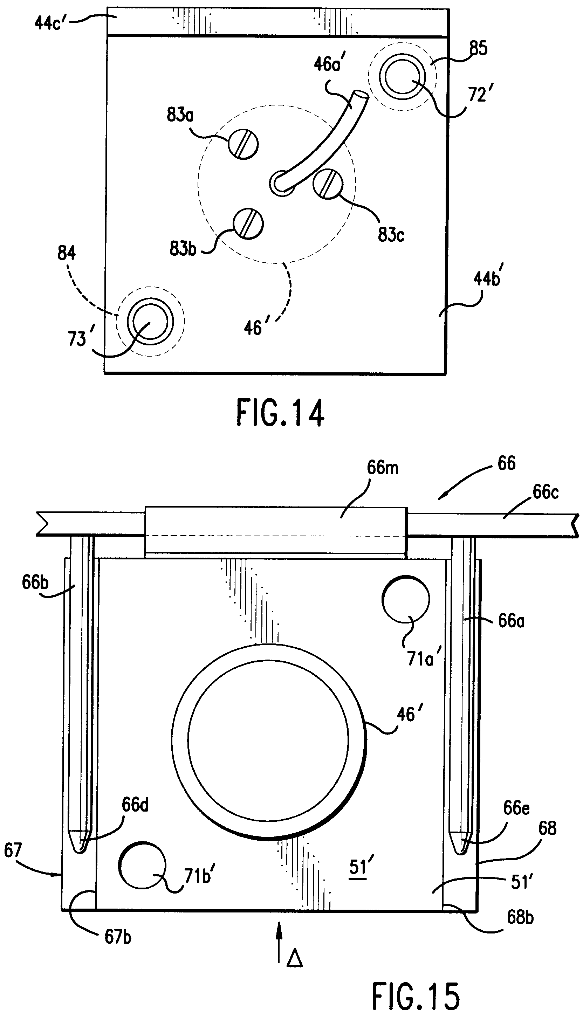

Turning to Figs. 13-15, prime numbered elements correspond to elements on Figs. 3-5. This alternative embodiment aligns each mold half 51, 59 with respect to the fixture frame base 30b of frame 30' using a horizontal rail alignment unit 66 which includes stationary mount block 66m, positioned on fixture base 30b, a raised horizontal cross piece 66c which carries two (2) parallel alignment rails 66a, 66b having square cross sections which rails 66a, 66b lie in mold end-to-end indentations 67, 68. Each mold indentation 67 and 68 includes a horizontal wall 67a, 68a and a vertical wall 67b, 68b. Rails 66a, 66b have tapered tips 66d, 66e to assist in guiding and positioning mold halves 51', as each is slid in direction D to the position of Fig. 15. As a mold half 51' is moved back against block 66m it is aligned and the mold half 51' is thereafter accurately positioned as pins 72' and 73' engage and move, as necessary, the mold half 51' during fixture descent. The spacings between block 66m and rails 66a, 66b and mold 51 are exaggerated in Fig. 15. These tolerances are small enough to achieve the centering tolerances set out below.

Vertical position of core 14 in ball cup 46' is accomplished using machined collars 84, 85 which slip over pins 72', 73' as shown. Set screws 82 are used to hold collars 84, 85. The length of collars 84, 85 determines the distance between cup plate 44b and mold halves 51', 59' and thereafter the position of core 14 (not shown) in cup 46'. Cup 46' is not adjustable in this embodiment but is held in fixed relationship to plate 44b' with fasteners 83a-c.

As in the other fixture embodiment, core 14 can, using this embodiment, be located up to .005 of an inch in any direction from the theoretical center.

Prior to proceeding with cover formation regular mold halves 51b, 51c are preheated to 140-180°F, the prepolymer is preheated and degassed at 140-160°F and the curative is also preheated and degassed at a temperature of 140-160°F. As so preheated, the prepolymer and curative both have approximately viscosities of 2000 cps.

The cover material used in the present method is polyurethane which is the product of a reaction between a polyurethane prepolymer and a curing agent. The polyurethane prepolymer is a product formed by a reaction between a polyol and a diisocyanate. The curing agent is either a polyamine or glycol. A catalyst may be employed to promote the reaction between the curing agent and the polyurethane prepolymer.

Suitable polyurethane prepolymers for use in the present invention are made from a polyol, such as polyether, polyester or polylactone, and a diisocyanate. Suitable diisocyanates for use in the present invention include 4,4'-diphenylmethane diisocyanate (MDI) and 3,3'-dimethyl-4,4'-biphenylene diisocyanate (TODI) and toluene diisocyanate (TDI).

Suitable polyether polyols include polytetramethylene ether glycol; poly(oxypropylene) glycol; and polybutadiene glycol. Suitable polyester polyols include polyethylene adipate glycol; polyethylene propylene adipate glycol; and polybutylene adipate glycol. Suitable polylactone polyols include diethylene glycol initiated caprolactone; 1,4-butanediol initiated caprolactone; trimethylol propane initiated caprolactone; and neopentyl glycol initiated caprolactone. The preferred polyols are polytetramethylene ether glycol; polyethylene adipate glycol; polybutylene adipate glycol; and diethylene glycol initiated caprolactone.

Suitable curatives for use in the present invention are selected from the slow-reacting polyamine group consisting of 3,5-dimethylthio-2,4-toluenediamine; 3,5-dimethylthio-2,6-toluenediamine; N,N'-dialkyldiamino diphenyl methane; trimethylene-glycol-di-p-aminobenzoate; polytetramethyleneoxide-di-p-aminobenzoate; or a difunctional glycol; and mixtures thereof. 3,5-dimethylthio-2,4-toluenediamine and 3,5-dimethylthio-2,6-toluenediamine are isomers and are sold under the trade name ETHACURE® 300 by Ethyl Corporation. Trimethylene glycol-di-p-aminobenzoate is sold under the trade name POLACURE 740M and polytetramethyleneoxide-di-p-aminobenzoates are sold under the trade name Polamine by Polaroid Corporation. N,N'-dialkyldiamino diphenyl methane is sold under the trade name UNILINK® by UOP.

Suitable difunctional glycols are 1,4-butanediol; 1,3-butanediol; 2,3-butanediol; 2,3-dimethyl-2,3-butanediol; dipropylene glycol; and ethylene glycol. Difunctional glycols are inherently slow-reacting.

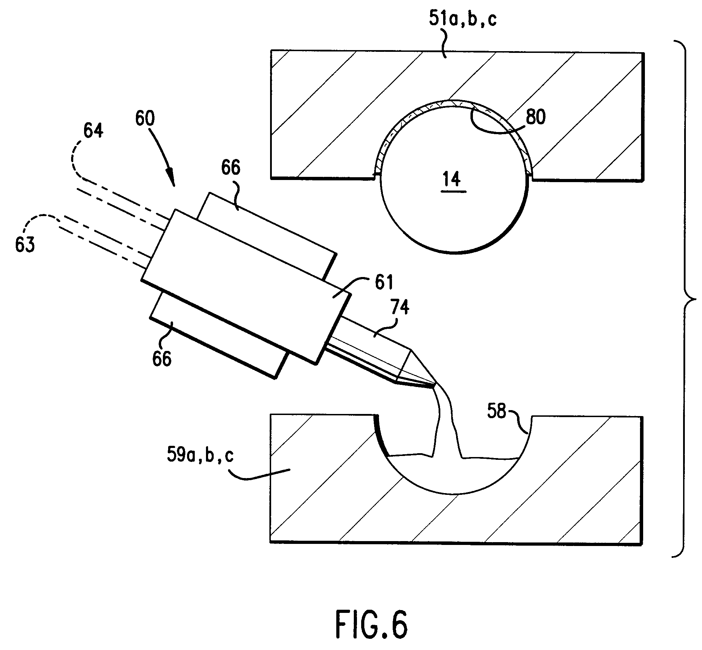

To start the cover formation, mixing of the prepolymer and curative is accomplished in motorized mixer 60 (Fig. 6) including mixing head 61 by feeding through lines 63 and 64 metered amounts of curative and prepolymer. The mixer 60 is cooled by cooling jacket 66. Due to the exothermic reaction of prepolymer and curative as mixed, the mixing head temperature will tend to rise. To control such a rise, the mixing head temperature is maintained by cooling in a range appropriate for the specific urethane material and to attain a workable gel time. From the time mixing commences until the reacting material is fed into each top mold 51a, b, c, etc. or bottom mold half 59a, b, c etc. is about 4-7 seconds. Top preheated mold halves 51a, b, c etc. are filled and placed in fixture unit 30 using pins 72, 73 moving into holes 71a, 71b in each mold 51a, b, c etc. After the reacting materials have resided in top mold halves 51a, b, c, etc. for about 50-80 seconds, a core 14 is lowered at a controlled speed into the gelling reacting mixture by lowering frame unit 44 using an pneumatic powered arrangement not shown. Alternatively, electric or hydraulic systems may be used. Controlled lowering is accomplished by adjustment of the powered arrangement and by use of pneumatic controls not shown to lessen and preferably prevent air bubbles. Stop 39b limits movement downward. The amount of mixture introduced into each mold half 51a is 5.4-5.7 g. At a later time a bottom mold half 59 of a series of bottom mold halves 59a, 59b, etc. has similar mixture amounts introduced into its cavity 58 (Fig. 6).

Upon location of the coated core 14 in halves mold 51a, b, c after gelling for 50-80 seconds, the vacuum is released in line 46a allowing core 14 to be released. Mold halves 51a, b, c with core 14 and solidified cover half 80 thereon is removed from the centering fixture unit 30, inverted (see Fig. 6) and mated with other mold halves 59a, b, c which, at an appropriate time earlier have had a selected quantity of reacting polyurethane prepolymer and curing agent introduced therein to commence gelling.

When a plurality of mold halves 51a, b, c etc. and 59a, b, c etc. are filled and clamped at one time, the following time sequence is preferred.

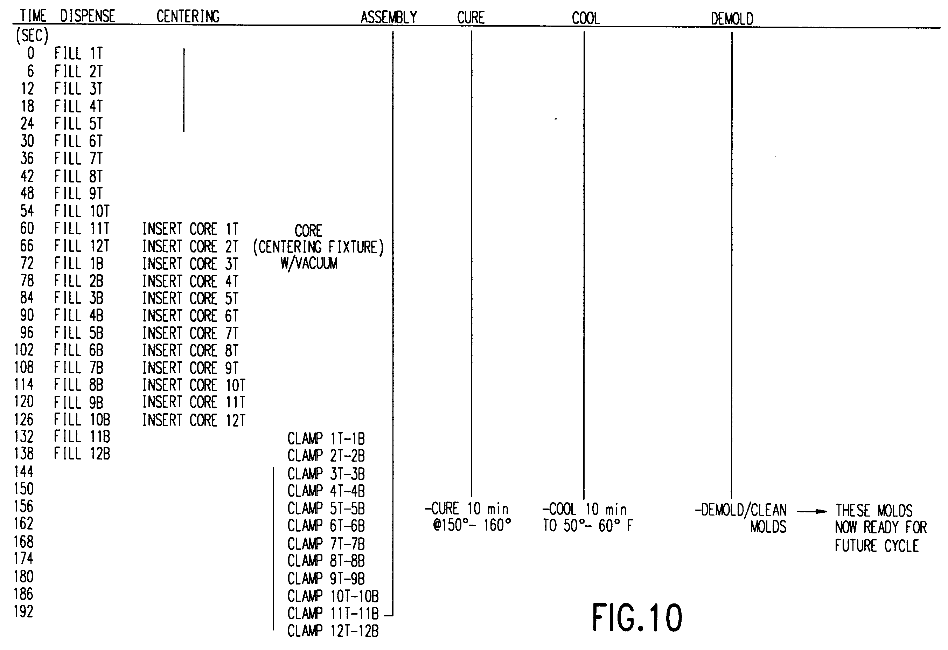

The sequence of introducing the polyurethane mix into the top mold half 51a (1T) and its mate the bottom mold half 59a (1B) is as follows: Introduction of the mixed prepolymer and curative into the top mold 51a starts the time sequence which start is referred to herein as time zero. The top half mold 51a receives the mix first at time zero and shortly mold half is placed in fixture unit 30. The core is initially inserted in the mix located in top mold 51a at time 60 seconds (see Fig. 10). At time 72 seconds, bottom mold half 59a (1B) is filled and at time 132 seconds, the mold halves 51a, 59a (1T-1B) are mated and clamped. At time 126 seconds, the mix has been in top half 51a 126 seconds and mix has been in bottom half 50a for 60 seconds. The sequence of filling other mold halves 51b (2T) and 59b (2T) and so forth follows a similar pattern. Within this sequence of mixing and dispensing of the prepolymer and curative commences at -4 to -7 seconds.

The thorough mixing that takes place in mixer 60 for the period of time described provides an improved cover material. Mold halves 51, 53 are pre-heated to 160-190°F. The core is held in its fully-down position for 30-40 seconds and the vacuum is then released. Following clamping of mold halves, the clamped mold is put in a curing oven for approximately 10 minutes to reach a mold temperature of 140-180°F followed by cooling for approximately 10 minutes to reach a mold temperature of 50-70°F.

The mold halves are clamped together under 400-600 psi pressure. The mold halves each contains sufficient reacting material to form hemispherical portions of the cover. Mold halves are held together for 10-15 minutes and thereafter cooled from 140°F-180°F to 50°F-70°F and then opened to demold the ball. Excess polyurethane is extruded from the mold cavity into sprue channels 51s forming solidified sprues not shown.

### Example I

A wound center was dipped in a 30% pre-vulcanized latex solution, drained and partially dried in a current of warm air. Remainder of drying was accomplished at room temperature. Latex penetration was approximately 50 mils. A mold half was preheated to approximately 160°F.

A mixture of 100 parts of Betathane 23.711, an MDI-based polyether prepolymer, 5.19 parts of titanium dioxide dispersion and 48.27 parts of Polamine 250 was prepared. Approximately 5.6g of this mixture was dispensed into a heated mold cavity and allowed to thicken for approximately one minute. A dipped wound core with a diameter of 1.580" was placed in the bottom mold cavity by means of the centering fixture shown in Figure 3. The core was held in a concentric position for approximately 40 seconds to allow the material to thicken further to support the core. The top heated mold half was then filled and the material allowed to thicken for approximately 1 minute. The top and bottom mold halves were then assembled and clamped by bolts or any conventional manner. The assembled mold was introduced into a curing oven and cured for 10 minutes at approximately 160°F. The assembled mold was then introduced into a cooling chamber for approximately 10 minutes to reach a mold temperature of 50-70°F.

The resulting cover was approximately 50 mils thick on a side and had a Shore D durometer of approximately 58-60 when measured after a two-day waiting period. Subsequently, the ball was painted and the cover was observed to be highly abrasion and cut resistant. Spin rate of this ball was approximately 100-200 rpm lower than a balata covered ball(Tour 100) with an acceptable velocity of 252.7 ft/sec.

### Example II

The steps of Example I were carried out except that the wound core was not dipped in a latex solution.

### Example III

The steps of Example I were carried out except that a solid core was used.

### Example IV

The steps of Example I were carried out with a solid core without a latex dip.

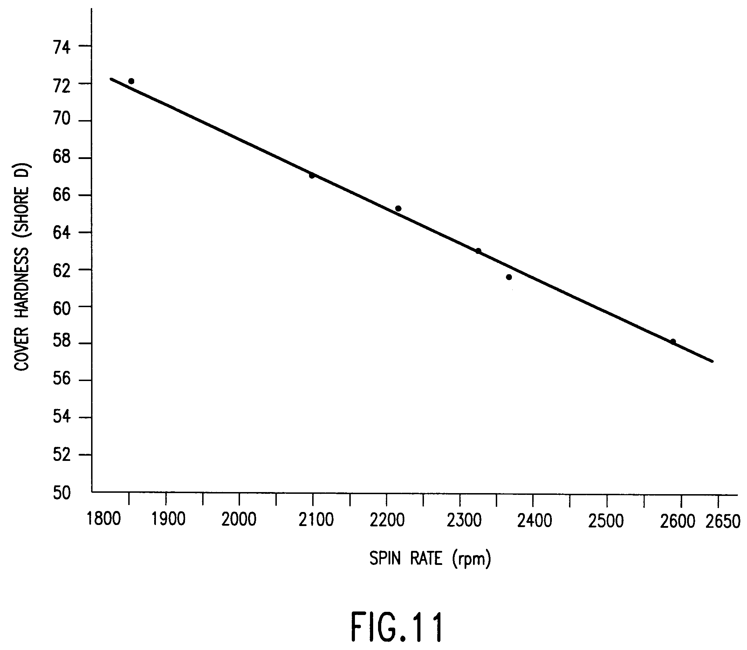

A range of core sizes that can be employed in this invention, whether dipped or non-dipped, is 1.560" to 1.610" was determined by previous testing that as core size of the ball increases, ball velocity increases (Fig. 11). However, if the durometer of the cover remains the same, spin rate of the ball was materially unaffected. Spin rate can be changed by modifying the durometer of the cover by selecting different ratios of materials or combining other materials. Cover durometers of 48 Shore D to 72 Shore D are attainable with the preferred range of 58-62 for this type of ball.

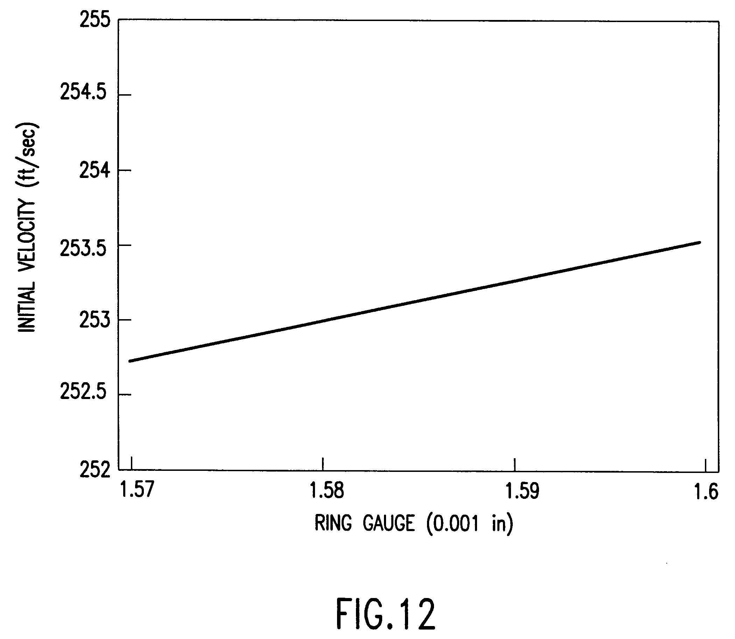

The relationship between durometer and spin rate was determined to be linear with harder durometer covers producing lower spin rates (Fig. 12).

## Claims

1. In a method of making a golf ball using a core holder and first and second mold halves with the first mold half positioned below such core holder, the improvement comprising
a) placing a core in a movable fixture;
b) placing polyurethane in a selected state of gel in the first mold half;
c) causing the fixture means with the core holder to descend against such polyurethane and causing thereafter the fixture means to move at a controlled rate against the polyurethane toward the first mold half;
d) as core downward movement continues, molding a quantity of partially gelled polyurethane around one half of the core in such first mold half;
e) disengaging the core from the core holder;
f) thereafter placing such core with its partially cured polyurethane cover while still in said first mold half against a second mold half having polyurethane at a selected state of gel therein and mating the two half molds together; and
g) heating the mated halves to further cure the polyurethane, cooling the mated halves and thereafter opening the mold.

2. In a method of making a golf ball using a core holder and first and second mold halves with the first mold half positioned below such core holder, the improvement comprising
a) encapsulating the core with an encapsulating material;
b) placing the encapsulated core in a movable fixture;
c) placing polyurethane in a selected state of gel in the first mold half;
d) causing the fixture means with the core holder to descend against such polyurethane and causing thereafter the fixture means to move at a controlled rate against the polyurethane toward the first mold half;
e) as core downward movement continues, molding a quantity of partially gelled polyurethane around one half of the core in such first mold half;
f) disengaging the core from the core holder;
g) thereafter placing such core with its partially cured polyurethane cover while still in said first mold half against a second mold half having polyurethane at a selected state of gel therein and mating the two half molds together; and
h) heating the mated halves to further cure the polyurethane, cooling the mated halves and thereafter opening the mold.

3. The method of claim 2 in which a solid core is covered with a layer of latex about 0.001-0.010 inch thick.

4. The method of claim 2 in which a wound core is impregnated with a layer of latex which penetrates into the core to a depth of about 0.050 inch.

5. The method of claim 1 in which the first mold half is held by mold holding means preadjusted prior to descent of the fixture means.

6. The method of claim 1 in which the core diameter is in the range of 1.560-1.610 inches.

7. The method of claim 1 in which the polyurethane includes polyether polyols and polyamines.

8. The method of claim 1 in which the rate of descent of the core on the fixture is such that no air bubbles are created as the core enters the polyurethane in the mold.

9. Apparatus for molding a golf ball cover around a core comprising a fixture, a mold half and adjustable mold holding means in turn comprising
a) a guide frame;
b) a holder frame movable up and down on a guide frame;
c) a ball core holder adjustably mounted on the holder frame;
d) alignment means for initially aligning the holder frame and the core ball holder prior to molding including a set mold half, mold guide rails, alignment pins and adjustment fasteners; f) limit means on the core frame to limit the downward travel of the core frame; and
g) lowering means controlling the descent of portions of the core frame carrying the core ball holder to control the movement of the core into the mold.

10. A golf ball having improved shear resistance, cut resistance and improved initial velocity comprising a core, and a molded polyurethane cover which ball is formed by the steps of
a) placing the core in a movable fixture;
b) placing polyurethane in a selected state of gel in the first mold half and allowing gelling to continue;
c) causing at a predetermined time the fixture means with the core holder to descend against such polyurethane and causing thereafter the fixture means to move at a controlled rate against the polyurethane toward the first mold half;
d) as core downward movement continues molding a quantity of partially gelled polyurethane around one half of the core in such first mold half;
e) disengaging the core from the core holder;
f) thereafter placing such core with its partially cured polyurethane cover while still in said first mold half against a second mold half having polyurethane at a selected state of gel therein and mating with force the two half molds together; and
g) heating the mated halves and further curing the polyurethane and thereafter opening the mold.

11. A golf ball having improved shear resistance, cut resistance and improved initial velocity comprising a core, a layer of latex on or within the core and a molded polyurethane cover which ball is formed by the steps of
a) encapsulating the core in liquid latex;
b) placing the encapsulated core in a movable fixture;
c) placing polyurethane in a selected state of gel in the first mold half and allowing gelling to continue;
d) causing at a predetermined time the fixture means with the core holder to descend against such polyurethane and causing thereafter the fixture means to move at a controlled rate against the polyurethane toward the first mold half;
e) as core downward movement continues molding a quantity of partially gelled polyurethane around one half of the core in such first mold half;
f) disengaging the core from the core holder;
g) thereafter placing such core with its partially cured polyurethane cover while still in said first mold half against a second mold half having polyurethane at a selected state of gel therein and mating with force the two half molds together; and
h) heating the mated halves and further curing the polyurethane and thereafter opening the mold.

12. The golf ball of claim 11 having a wound core is penetrated with a layer of latex about 0.050 inch thick.

13. The golf ball of claim 11 having a solid core is covered with a layer of latex about 0.001-0.010 inch thick.

14. The golf ball of claim 10 in which the first mold half is held by mold holding means preadjusted for core centering prior to descent of the fixture means.

15. The golf ball of claim 10 in which the polyurethane includes polyether polyols and polyamines.

16. The golf ball of claim 10 in which the mix has resided in the first half mold for about 60 seconds when the core is introduced and resided in the second half mold about 55 seconds when the mold halves are clamped.

17. The golf ball of claim 10 in which the core diameter is in the range of 1.560-1.610 inches.

18. The method of claim 1 in which the mold halves are preheated.

19. The method of claim 2 in which polyurethane includes a polyurethane prepolymer and a curing agent which are mixed and thereafter gel for 50-80 seconds before the step of disengaging the core from the core holder.

20. The method of claim 5 in which molding means is preadjusted by the steps of releasing the mold holding means, causing a set-up core attached to the movable fixture to descend into the first mold half to move the mold holding means and thereafter securing the mold holding means in a fixed place.

21. The method of claim 18 in which the preheating temperature is in the range of 140°F to 180°F range.

22. The method of claim 2 in which the first and second quantity of polyurethane each are composed of a prepolymer and a curative and in which the first quantity is mixed and has cured for substantially the same length of time as the second quantity when the first and second molds are finally engaged with the core.

23. The method of claim 1 in which the quantity of polyurethane including prepolymer and curing agent in the first half mold is allowed to thicken after mixing of the prepolymer and curing agent about one hundred seconds prior to release of the core by the core holder and in which the quantity of polyurethane in the second mold half thickens for sixty seconds prior to mating of the halves.

24. The method of claim 1 in which the core diameter is in the range of 1.560-1.610 inches.

25. The method of claim 1 in which the polyurethane is a product of the reaction between a polyurethane prepolymer and a curing agent with the polyurethane prepolymer being a product formed by a reaction between a polyol and a diisocyanate.

26. The method of claim 25 in which the prepolymer is a 4,4'-diphenylmethane diisocyanate and a polyether type polyol.

27. The method of claim 25 in which the curing agent is polytetramethyleneoxide-di-p-amino benzoate.

28. In a method of making a golf ball using a core holder and first and second mold halves with the first mold half positioned below such core holder, the improvement comprising
a) placing a core in such core holder which in turn is held by a movable fixture;
b) placing polyurethane in the first mold half;
c) holding the first mold half by mold holding means prior to the movement of said movable fixture, which mold holding means is accomplished by steps of
i) releasing the mold holding means;
ii) causing pins with collar means thereon attached to the movable fixture to engage the first mold half bushing means to align the first half mold to control the positions in horizontal directions and the depth of core insertion into the polyurethane;
d) causing the movable fixture means with the core holder to descend against such polyurethane when such polyurethane is in a selected state of gel and causing thereafter the movable fixture to move at a controlled rate against the polyurethane toward the first mold half;
e) as core downward movement continues, molding a quantity of partially gelled polyurethane around one half of the core in such first mold half;
f) disengaging the core from the core holder after a selected period of time;
g) thereafter placing such core with its partially cured polyurethane cover while still in said first mold half against a second mold half having polyurethane at a selected state of gel therein and mating the two half molds together; and
h) heating the mated halves to further cure the polyurethane cooling the mated halves and thereafter opening the mold.

29. A method of claim 1 in which the movable fixture is first mounted on frame means for reciprocal movement thereon and in which each first mold half is positioned with respect to said fixture between guide means affixed to said frame means and collared pin means on the movable fixture accurately locate the mold half as the fixture descends whereby the core on the movable fixture is locatable with respect to the first mold half.
